# EUROPEAN PATENT APPLICATION

(11) **EP 3 053 454 A1**
(43) Date of publication of application: **10.08.2016**
(21) Application number: 15425004.7
(22) Date of filing: 30.01.2015
(51) Int. Cl.: A23L 5/30, A23L 19/00, A23B 7/005

(54) **Method for the production of dried radicchio and dried radicchio obtainable from such a method**

(71) Applicant: Società Agricola Taflo s.s. di Visentin Lucia & C., 36026 Pojana Maggiore (VI) (IT)
(72) Inventor: Visentin, Lucia, I-36026 Pojana Maggiore (Vicenza) (IT); Negretto, Pierguido, I-36026 Pojana Maggiore (Vicenza) (IT)
(74) Representative: Zambardino, Umberto

(57) **Abstract**

The present invention relates to a method for the production of dried or dehydrated radicchio, comprising the step of bringing a radicchio vegetable material, arranged in the form of at least one thin layer, preferably in the form of a plurality of thin separate layers, into contact with a stream of gas heated to a temperature of between 30°C and 45°C for a time period sufficient to obtain a predetermined moisture content in the dried product.

The dried radicchio thus obtained maintains the organoleptic and nutritional characteristics of fresh radicchio and may replace the latter in the food preparations where it is used. Moreover, the dried radicchio according to the invention has a longer shelf-life, with the result that this vegetable product is available for culinary uses even during time periods different from the season in which it is cultivated.

## Description

### Field of application

According to its more general aspect, the present invention relates to the production of dried or dehydrated vegetable products for alimentary use, such as ingredients or additives for the subsequent preparation of dishes or finished food products ready for consumption.

In particular, the present invention relates to a method for the production of dried or dehydrated radicchio from the vegetable product in the fresh state.

The invention also relates to dried or dehydrated radicchio which can be obtained by means of the abovementioned method and which is distinguished in particular but not exclusively by the fact that it maintains substantially the organoleptic characteristics of the fresh vegetable product.

### Prior art

As is known, radicchio is a dicotyledon plant of the *Asteraceae* family, which belongs to the genus *Cichorium* and in particular to the *Intybus.* species. The characters of the original species have been modified over centuries owing to adaptation to the environment, natural hybridization and selection, up to the formation of the present-day varieties. These include known varieties of red radicchio, which has a ruby red or purple colour, and "radicchio variegato" which has a green/yellowish colour dotted with red/purple and has an open head.

Of particular importance are the varieties of red radicchio, for which the most suitable growing and production conditions can be found only in specific regions, in particular in North East Italy. The most well-known varieties of red radicchio include:
- red radicchio of Treviso, early or late variety (elongate form with narrow leaves and half-closed head)
- red radicchio of Verona (elongate form with broad leaves and closed head);
- red radicchio of Chioggia (spherical shape and closed head).

Many varieties of radicchio are furthermore classified as early or late, the taste and aroma of which vary.

For example, red radicchio of Treviso is commercially available both as the early variety and as the late variety. In the early variety, the radicchio is mature already at the end of September, has large long heads, with broad red leaves and a long white central rib. It is preferred for preparation by means of grilling. The late variety, which is also known as "classico spadone trevigiano", is available instead from the middle of November and is more fragrant and tasty. It has heads formed by compact and uniform sprouts, narrow leaves and a completely white dorsal rib. The leaves of this variety are tender and crunchy, sweet and slightly bitter, and may be eaten in various ways, for example raw in salads or cooked, grilled, fried, simmered, in risotto, etc.

On the other hand, the red radicchio of Verona, in particular the red radicchio PGI (Protected Geographical Indication) of Verona, is a variety of chicory characterized by a deep, dark red colour and white stripes, a crunchy consistency and an unmistakable slightly bitter taste. It is used for the preparation of salads, soups, risotto and other first-course dishes, preserves, beverages, cheeses, cold cuts, meat and fish.

It may be used in many other ways, but always retains its unmistakable taste which makes it highly desirable from a culinary point of view.

Despite its excellent character and its many varied and highly rated culinary uses briefly mentioned above, radicchio, in particular the red radicchio of Verona and Treviso varieties, remains a vegetable which can be used only for a few months of the year during the period of its cultivation, which is mainly in winter.

As a result of its high content of vitamin C and flavonoids, radicchio, once harvested, is subject in particular to the oxidising effects of sunlight. The latter drastically reduces the lifetime of the product, causing:
- irreversible loss of the intrinsic nutritional value of the raw material;
- organoleptic deterioration which is evident in the form of: limp texture, softening, enzymatic browning, opaque surface and deterioration of the microbiological state.

Consequently, even if stored at a refrigerated temperature, radicchio is inevitably prone to deterioration within a few days and therefore cannot be stored for relatively long periods.

Therefore, exists the need to increase the shelf-life of radicchio, without altering its specific organoleptic and nutritional characteristics so that it is available for consumption over a longer period of time and in particular also during time periods different from the seasons during which it is cultivated.

In this connection, it is known generally that the shelf-life of vegetable products intended for consumption may be increased by drying or dehydrating them after harvesting and also known are various industrial drying apparatus and methods for this purpose.

However, in the case of radicchio, owing to its extremely delicate nature, hitherto there do not exist suitable methods for drying or dehydrating this vegetable.

The technical problem underlying the present invention is therefore that of providing a method for dehydrating or drying fresh radicchio, which can be realized in a simple and low-cost manner and which at the same time is able to preserve the organoleptic and/or nutritional characteristics of the fresh vegetable product.

### Summary of the invention

This technical problem is solved according to the present invention by a method for the production of dried or dehydrated radicchio, comprising the step of bringing a radicchio vegetable material, arranged in the form of at least one thin layer, preferably in the form of a plurality of thin separate layers, into contact with a stream of gas heated to a temperature of between 30°C and 45°C for a time period sufficient to achieve a predetermined moisture content in the dried product.

Preferably, said gas consists of or comprises air.

Preferably, said temperature of the heated gas, for example air, is between 38°C and 42°C.

The aforementioned technical problem is also solved by a dried radicchio obtainable by means of a drying method as described above. This dried radicchio is characterized by the fact that it substantially maintains the organoleptic characteristics, in particular the colour and most of the main nutritional properties of the fresh vegetable product. At the same time, the dried radicchio according to the invention has a reduced moisture content compared to the fresh vegetable product, making it suitable for conservation over a relatively long period of time.

The characteristic features and advantages of the present invention will become clearer from the detailed description and the examples below, which will be provided by way of a non-limiting example.

### Detailed description

The term "radicchio" is understood as meaning any dicotyledon plant of the *Asteraceae* family, which belongs to the genus *Cichorium* and in particular to the *Intybus* species.

Preferably, in the present invention red radicchio is used, and in a particularly preferred manner red radicchio of Treviso or red radicchio of Verona in their early or late varieties, the characteristics of which have been described above in the present description. In any case, the red radicchio used in the method according to the invention may be subjected to the cultivation technique of forced whitening using the known production methods specific for each variety. By way of example, the early variety of red radicchio of Treviso is cultivated in the open and, at the end of summer, the heads are tied in order to continue the maturation process and obtain the forced whitening which is therefore performed before harvesting. On the other hand, the late variety of red radicchio of Treviso is much more highly valued owing to the complexity of the production process where the harvested vegetable with its taproot or root is bound in bunches and placed with the taproot immersed in tanks of groundwater at a constant temperature of 12-15°C for a period of 15-20 days for the whitening phase.

The term "radicchio vegetable material" is understood as meaning any edible part obtained or derived from the radicchio plant, in particular the leaves. For this purpose, after whitening, the radicchio plants are subjected to cleaning of the outer bracts (grooming) in order to obtain the edible parts of interest, in particular the leaves.

All the edible parts may be used as such or may be preferably divided up into separate small-size parts, such as cubes, wads, flakes and the like, or also ground, after drying, to obtain a powder. The radicchio vegetable material may therefore consist of whole edible parts derived from the radicchio plant after cultivation and whitening, such as in particular the leaves, and/or pieces of these edible parts in any form, for example parts of radicchio leaves cut to various sizes.

Preferably, the radicchio vegetable material consists of red radicchio of Treviso or red radicchio of Verona.

The operation of division into pieces (cutting) may be performed using apparatus which are conventional per se such as vegetable slicers.

According to a preferred embodiment of the invention, the radicchio vegetable material is in the form of whole leaves or separate pieces, preferably cubes, obtained from the division of the edible parts (e.g. leaves) derived from the radicchio plant.

Preferably, these separate pieces each have a size, understood as maximum extension, preferably of between 1 mm and 10 mm, in particular between 3 mm and 7 mm.

In accordance with the present invention, the radicchio vegetable material, in the form of edible parts which are whole (for example whole leaves) and/or small in size (for example cubes), is arranged to form a layer or preferably a plurality of separate layers so as to be predisposed for drying according to the present invention.

This may be advantageously achieved by arranging the radicchio vegetable material in separate layers on a surface of the drying apparatus (such as an oven), for example on drying surfaces of this apparatus. Advantageously, these surfaces may be perforated, i.e. provided with a plurality of holes, for the passage of a hot gas, for example hot air, which performs drying of the radicchio vegetable material according to the invention.

The vegetable material thus arranged is then acted on by a stream of gas heated to a temperature of between 30°C and 45°C, for a period of time sufficient to reach a predetermined moisture content in the dried product.

Preferably, said temperature of the heated gas, for example air, ranges between 38°C and 42°C.

Advantageously, the drying apparatus may be provided with a dehumidifier for removing the moisture from the heated gas after each passage over the vegetable material to be dried. In other words, after passing over the material to be dried, the heated gas may be dehumidified in an associated dehumidifier or inside the drying apparatus and then continue to circulate within the drying apparatus so as to pass subsequently various times over the vegetable material to be dried until the desired water content has been removed from the vegetable material. Inside the dehumidifier, the heated gas containing water in the vapour state removed from the vegetable material comes into contact with a heat exchanger passed through by a refrigerating fluid where the water is condensed and then eliminated.

Preferably, the drying time for the layer or layers of radicchio vegetable material is greater than 24 hours. More preferably, the drying time is between 30 hours and 48 hours. In this way, a dried product with a residual moisture content of between 5% and 15%, preferably 10-12%, is obtained.

The heated gas used in the method according to the invention may be any gas or gas mixture which is inert vis-à-vis the radicchio vegetable material to be dried, namely the gas is unable to alter or degrade the organoleptic characteristics of the vegetable material when brought into contact with it during the drying or dehydration conditions according to the invention.

Preferably, the gas consists of air or a mixture comprising air, with the advantage of lower production costs due to the greater availability and low cost of air.

In a particular embodiment of the present invention, after the drying step, performed in the manner indicated above, the dried radicchio vegetable material, in the form of whole and/or small-size edible pieces (for example cubes), is subjected to grinding in order to obtain a powder.

The grinding operation may be performed using apparatus conventional per se, such as mills.

It has been surprisingly found that drying of a radicchio vegetable material according to the invention results in a dried product which maintains the same chromatic and organoleptic characteristics as fresh radicchio, despite the tendency of this vegetable product to deteriorate rapidly under the action of external agents such as, in particular, light and/or heat. Without being tied to any particular scientific theory, it is considered that the use of relatively low operating temperatures for the drying gases primarily helps achieve this result. It has in fact been found that if drying is performed at operating temperatures even a few degrees above the upper limit temperature used in the method according to the invention, a significant alteration in the colour is obtained in the dried radicchio, which changes from the deep red characteristic of fresh radicchio to a brown colour with a significant alteration also of the taste of the dishes obtained using this dried product compared to the taste which is expected when using fresh radicchio.

Another important aspect for achieving the aforementioned result consists in the arrangement of the radicchio vegetable material in thin separate layers inside the drying oven. Thus the area of contact with the heated gas increases significantly, and consequently also the speed of removal of the water from the fresh vegetable product increase; this constitutes a very important feature for preservation of the anthocyans which must not be altered by the heating/drying process since they are responsible for the red/purple colouring of the radicchio.

The combined effect of heating at relatively low operating temperatures and the arrangement of the vegetable material to be dried, in layers, in accordance with the present invention, therefore allows only the water to be removed from the fresh radicchio vegetable material and a dried product to be obtained where essentially the same colour and the other organoleptic characteristics of fresh radicchio are preserved. Also the nutritional properties are for the most part preserved in the dried radicchio and are comparable with those of the fresh vegetable.

The dried product thus obtained therefore forms an optimum alternative to fresh radicchio for the normal culinary uses of this vegetable, having at the same time the notable advantage, compared to fresh radicchio, of a long shelf-life comparable to that of other dried vegetables in the same category of products present on the market, owing to its low moisture content.

In the light of the above description it is clear that the present invention brilliantly solves the aforementioned technical problem. In fact, the dried radicchio which can be obtained by means of the method according to the invention overcomes the storage and preservation problems associated with this vegetable product in the fresh state, resulting in the radicchio being readily available also during time periods different from its customary season of use, like other dried vegetable products, while maintaining the same organoleptic and nutritional characteristics of the fresh product.

In particular the dried radicchio according to the method of the invention may be stored for a period of at least 6 months at room temperature before being eaten.

The dried radicchio which can be obtained according to the invention may be used as an ingredient in a very large number of food preparations and dishes (ready meals) both at home and in the food and/or public catering industry. Owing to the fact that the organoleptic characteristics of the fresh radicchio remain substantially unaltered during the drying or dehydration treatment according to the invention, the food preparations obtained using the dried radicchio according to the invention are of a high quality, entirely comparable to that which can be obtained using fresh radicchio.

The dried radicchio may be obtained in the form of loose pieces (for example cubes) or in powder form, namely with a particle size similar to that of ground spices. The two formats may be used for different culinary purposes. In particular, the radicchio dried as separate pieces, such as cubes, may be an excellent substitute for the fresh vegetable of similar size used in the preparation of ready-made meals, for example first course dishes such as risotto, pasta and soup. It may be used advantageously in the form of separate pieces also for the preparation of preserves or other food preparations.

On the other hand, the dried radicchio in powder form may be conveniently used as a herb for flavouring food such as meat, cheese, fish and mixed salad.

Therefore the dried radicchio according to the invention may be used effectively and advantageously as a vegetable ingredient or condiment (as an alternative to fresh radicchio) for the direct preparation of food or finished food products which are ready-to-eat, mixing it with the further ingredients of interest based on the most widely varying recipes in particular, but not exclusively, of Mediterranean cuisine.

In particular, as regards use in the food industry or in the context of public catering, the dried radicchio constitutes advantageously a ready prepared ingredient or condiment which simplifies or speeds up enormously the operations for preparation of the finished products which use radicchio as an ingredient or condiment.

At the same time, as a result of the dried radicchio according to the invention, the food industry may dispense with a series of production line operations for the aforementioned finished products, which are particularly onerous, such the purchase and storage of the radicchio vegetable raw material, when available, and cooking thereof.

Moreover, the dried radicchio according to the invention may be acquired by the food industry and/or by public catering concerns at the time when there exists an actual need to use it, in packaged form and in supplied amounts which can be adapted to each single requirement.

As regards, instead, the retail use (for example at home or in a small restaurant) of the dried radicchio according to the invention, the important advantage of a significant saving in time on the part of the user/consumer is also evident here, since he/she is able to introduce the dried radicchio according to the invention directly into the food preparation concerned and then continue said preparation directly depending on the specific culinary composition which is to be prepared.

It should be noted, in fact, that with the dried radicchio according to the invention all the preliminary operations which are carried out on the fresh radicchio, in particular washing, cutting and simmering, are avoided. The latter operation requires in particular a lot of time for removal of the desired water content from the radicchio so as to make it suitable for use in the food preparation concerned, especially in dishes such as risotto, lasagna, crepes, soups, etc.

Moreover, there is the advantage of a reduction in the domestic storage of the radicchio which always gives rise to major conservation difficulties owing to the high sensitivity of this vegetable product to heat/light as mentioned above.

Further advantages of the dried radicchio according to the invention comprise:
- a reduction in the waste produced by the user/consumer, with a consequent reduction in the amount of organic waste to be disposed of;
- possibility of using only the quantity of dried radicchio actually needed for the culinary preparation concerned (with the non-used part which may continue to be effectively stored inside the original packaging/container which for this purpose may be advantageously of the re-closable type), thereby avoiding wasting any excess radicchio which is difficult to store, as often occurs when preparing domestic food dishes;
- reduction in the quantity of radicchio required for preparation of the dish concerned compared to the quantity of fresh radicchio required for the preparation of the same dish;

It should be noted that with the present invention there is the possibility of the radicchio reaching countries which hitherto have been unable to use it precisely because of the highly perishable nature of the fresh product which make it difficult to export. This, in particular, in the case of red radicchio of Verona and red radicchio of Treviso which are native varieties, the production of which is dependent on particular soil and climate conditions and which for this reason cannot be reproduced in other environments with the same organoleptic characteristics. Drying of these varieties of radicchio, precisely in the area of their production, make the radicchio even more unique since, if cultivated elsewhere, it would lose its peculiar character.

The present invention will now be described by means of a number of non-limiting examples of embodiment provided with reference to the accompanying figures in which:
- Figure 1 shows a comparison between a risotto prepared using a dried red radicchio according to the invention (left-hand side) and a risotto prepared using a fresh red radicchio (right-hand side);
- Figure 2 shows a comparison between a lasagna prepared using a dried red radicchio according to the invention (left-hand side) and a lasagna prepared using a fresh red radicchio (right-hand side);
- Figure 3 shows a comparison between a risotto prepared using a red radicchio dried according to the invention (left-hand side) and a risotto prepared using a red radicchio not dried according to the invention (right-hand side).

### Example 1

### Preparation of dried red radicchio according to the invention

Using a vegetable slicer of the conventional type, 100g of fresh, ready cleaned, red radicchio of Treviso were cut so as to form small cubes with a size of between 4 mm and 6 mm.

Then, these cubes of radicchio were transferred into a conventional dehydration apparatus (drying oven) where they were arranged in separate layers alongside each other on a perforated surface of this apparatus. The layers of fresh radicchio cubes were then exposed to a hot air stream having a temperature of 38-42°C for about 36 hours, obtaining at the end of treatment 10g of cubes of dried radicchio with a moisture content of 10-12%.

From a visual comparison it could be seen that the dried radicchio thus obtained had the same red/purple colour as the initial fresh radicchio, this being an indication that the treatment according to the invention does not cause a significant alteration of the substances (anthocyans) responsible for the colour of this vegetable.

The preparation as described above was repeated for 100g of red radicchio of Verona and the same results were obtained with regard to the original characteristics of the fresh vegetable product, in particular the colour, being maintained in the dried product.

Also the energy and nutritional content of the fresh red radicchio, which is well known in the art (as illustrated for example in the table shown in the following link: http://www.valori-alimenti.com/nutrizionali/ tabella11952.php), was maintained in the dried product according to the invention, with the sole substantial difference that the water content in the dried product was obviously significantly less.

### Example 2

### Comparative test for preparing a risotto using dried radicchio according to the invention and a risotto with fresh radicchio

Using an entirely conventional procedure on the one hand a risotto with red radicchio of Treviso and on the other hand a risotto with red radicchio of Verona were prepared, both the varieties of radicchio having been dried as described in Example 1. Using the same procedure the respective comparison risottos were then also prepared using the same of type of radicchio in the fresh state.

Tables 1 and 2 below show information relating to the ingredients and the respective quantities used for each risotto preparation, the cooking times and the duration and type of preliminary treatment carried out on the radicchio where necessary (fresh radicchio).

**Table 1**

| Preparation of a risotto using fresh red radicchio of Verona (on the left) and a risotto using dried red radicchio of Verona according to the invention (on the right). | | | | | | | |
|---|---|---|---|---|---|---|---|
| FRESH RADICCHIO PGI VERONA | | | | DRIED RADICCHIO PGI VERONA | | | |
| Ingredients | Quantity | **Cooking time** | **Time needed to prepare and cut radicchio** | Ingredients | Quantity | **Cooking time** | **Time needed to prepare and cut radicchio** |
| Mirepoix | Onion 30g 1 clove of garlic Oil 40g | **7 minutes** | | Mirepoix | Onion 30g 1 clove of garlic Oil 40g | **7 minutes** | |
| Fresh radicchio | 150g | **25 minutes** | **10 minutes** | Dry radicchio | 6g | **3 minutes** | **0 minutes** |
| Rice | 160g | **16 minutes** | | Rice | 160g | **16 minutes** | |
| Parmesan cheese | 25g | | | Parmesan cheese | 25g | | |

**Table 2**

| Preparation of a risotto using fresh red radicchio of Treviso (on the left) and a risotto using dried red radicchio of Treviso according to the invention (on the right). | | | | | | | |
|---|---|---|---|---|---|---|---|
| FRESH RADICCHIO PGI TREVISO | | | | DRIED RADICCHIO PGI TREVISO | | | |
| Ingredients | Quantity | **Cooking time** | **Time needed to prepare and cut radicchio** | Ingredients | Quantity | **Cooking time** | **Time needed to prepare and cut radicchio** |
| Mirepoix | Onion 30g 1 clove of garlic Oil 40g | **7 minutes** | | Mirepoix | Onion 30g 1 clove of garlic Oil 40g | **7 minutes** | |
| Fresh radicchio | 150g | **25 minutes** | **10 minutes** | Dry radicchio | 6g | **3 minutes** | **0 minutes** |
| Rice | 160g | **16 minutes** | | Rice | 160g | **16 minutes** | |
| Parmesan cheese | 25g | | | Parmesan cheese | 25g | | |

As can be noted, the dishes used in the comparison (Tables 1 and 2) were prepared in exactly the same manner, the sole variables being the type of radicchio used (fresh or dried according to the invention) and the quantity of radicchio provided.

In this connection it can noted that, for the "traditional" preparation of a risotto using 160g of rice, 150g of fresh radicchio are needed, while instead just 6g of dried radicchio according to the invention are needed to obtain a risotto which is comparable in terms of nutritional values and organoleptic characteristics.

Therefore, the use of the radicchio according to the invention results in considerable savings in terms of cost since the quantity of dried radicchio needed to prepare the dish in question (risotto) is much less than the quantity of fresh radicchio needed to prepare the same dish. Furthermore, it can be noted that the time needed to prepare fully a risotto with radicchio containing 160g of rice and 150g of fresh radicchio is about 58 minutes, while a total time of only 26 minutes is needed to prepare the same quantity of risotto using dried radicchio.

Therefore, the use of the dried radicchio according to the invention results also in a considerable reduction in the amount of time needed to prepare the dish in question (risotto) compared to the use of fresh radicchio.

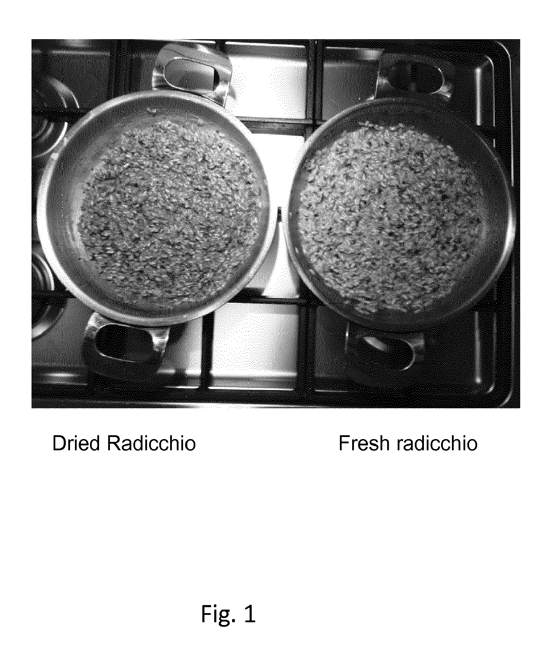

Moreover, as can be seen in Figure 1, the shiny colour which the dried radicchio gives the dish is the same or even better than that of the equivalent fresh product.

Without being tied to any particular scientific theory, it is considered that the greater yield obtained using the dried radicchio, as illustrated above, is to be attributed mainly to the fact that, during the cooking/simmering process, the fresh radicchio is subject to a very intense prolonged heat treatment which, in addition to causing the evaporation of the water contained inside it, also causes the loss of important aromatic components which instead are preserved in the dried radicchio according to the method of the invention. The dried product is therefore richer in the components which are responsible for its typical bouquet since they are retained inside the dried product according to the invention.

### Example 3

### Comparative test for preparing a lasagna using dried radicchio according to the invention and a lasagna with fresh radicchio

Using an entirely conventional procedure on the one hand a lasagna with red radicchio of Treviso and on the other hand a lasagna with red radicchio of Verona were prepared, both the varieties of radicchio having been dried as described in Example 1. Using the same procedure the respective comparison lasagne were then also prepared using the same of type of radicchio in the fresh state.

Tables 3 and 4 below show information relating to the ingredients and the respective quantities used for each lasagna preparation, the cooking times and the duration and type of preliminary treatment carried out on the radicchio where necessary (fresh radicchio).

**Table 3**

| Preparation of a lasagna using fresh red radicchio of Verona (on the left) and a lasagna using dried red radicchio of Verona according to the invention (on the right). | | | | | | | |
|---|---|---|---|---|---|---|---|
| FRESH RADICCHIO PGI VERONA | | | | DRIED RADICCHIO PGI VERONA | | | |
| Ingredients | Quantity | **Cooking time** | **Time needed to prepare and cut radicchio** | Ingredients | Quantity | **Cooking time** | **Time needed to prepare and cut radicchio** |
| Béchamel | 100ml | **15 minutes** | | Béchamel | 100ml | **15 minutes** | |
| Fresh radicchio | 180g | **25 minutes** | **12 minutes** | Dry radicchio | 10g | **0 minutes** | **0 minutes** |
| Lasagna | 80g | **30 minutes** | | Lasagna | 80g | **30 minutes** | |
| Parmesan cheese | 30g | | | Parmesan cheese | 30g | | |

**Table 4**

| Preparation of a lasagna using fresh red radicchio of Treviso (on the left) and a lasagna using dried red radicchio of Treviso according to the invention (on the right). | | | | | | | |
|---|---|---|---|---|---|---|---|
| FRESH RADICCHIO PGI TREVISO | | | | DRIED RADICCHIO PGI TREVISO | | | |
| Ingredients | Quantity | **Cooking time** | **Time needed to prepare and cut radicchio** | Ingredients | Quantity | **Cooking time** | **Time needed to prepare and cut radicchio** |
| Béchamel | 100ml | **15 minutes** | | Béchamel | 100ml | **15 minutes** | |
| Fresh radicchio | 180g | **25 minutes** | **12 minutes** | Dry radicchio | 10g | **0 minutes** | **0 minutes** |
| Lasagna | 80g | **30 minutes** | | Lasagna | 80g | **30 minutes** | |
| Parmesan cheese | 30g | | | Parmesan cheese | 30g | | |

As can be noted, the dishes used in the comparison (Tables 3 and 4) were prepared in the exactly the same manner, the sole variables being the type of radicchio (fresh or dried according to the invention) and the quantities used in the respective preparations.

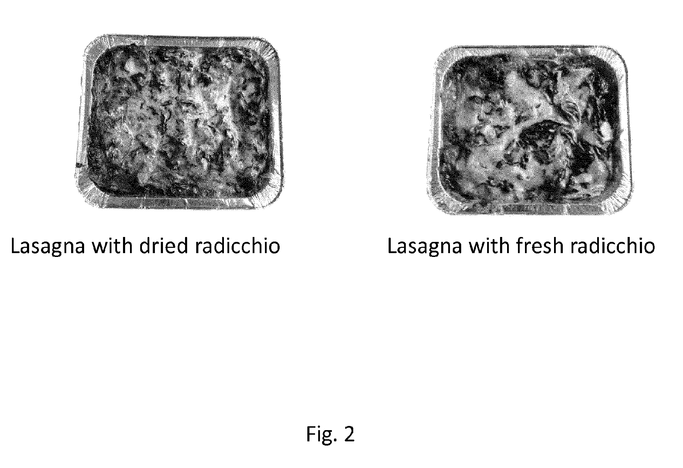

In this case also it can be noted that the quantity of dried radicchio necessary for the preparation is much less than that required for the fresh radicchio in order to obtain lasagne comparable in terms of nutritional values and organoleptic characteristics (10g of dried radicchio as opposed to 180g of fresh radicchio), as can be seen in Figure 2.

Therefore, in this case also, use of the radicchio according to the invention results in significant savings in terms of cost for preparation of the dish compared to use of the fresh radicchio for preparation of the same dish.

Furthermore, the time needed to prepare fully a lasagna with radicchio containing 80g of lasagna and 180g of fresh radicchio is about 82 minutes, while a total time of only 45 minutes is needed to prepare the same quantity of lasagna using dried radicchio. Therefore, use of the dried radicchio according to the invention also results in a considerable reduction in the time needed to prepare the dish in question (lasagna) compared to the use of fresh radicchio.

### Example 4

### Comparative test for preparing a risotto using radicchio dried according to the invention and a risotto with radicchio not dried according to the invention

100g of fresh red radicchio were dried according to the procedure of Example 1, except for the fact that the drying temperature was greater than that envisaged by the present invention, namely 50°C. In this way 10 g of red radicchio not dried according to the invention were obtained.

Using the procedure described in Example 2 a risotto was prepared using a red radicchio dried according to the invention and a risotto was prepared using a red radicchio not dried according to the invention, as indicated above. The risottos were prepared in the same manner, the sole variable being the type of dried dry radicchio.

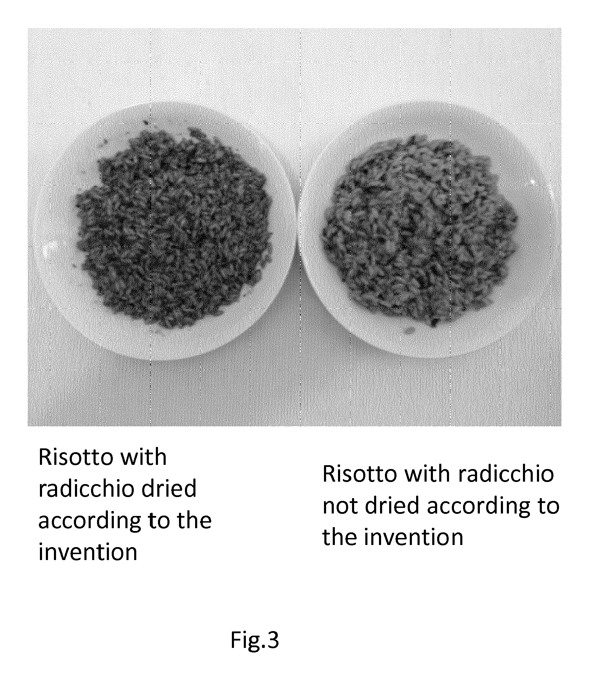

The results can be seen in Figure 3. As can be noted, the risotto prepared using the radicchio dried according to the invention maintains the colour characteristics of fresh radicchio, while the risotto prepared using radicchio not dried according to the invention has a brown colour, which is an indication of chemical/physical deterioration of the fresh radicchio.

### Example 5

10 g of dried radicchio in the form of cubes were prepared using the procedure described in Example 1. Then the cubes were reduced further in size with the aid of a mill until a powder was obtained.

Using this "spice-like" particle size of dried radicchio according to the invention, various dishes were flavoured by adding the dried radicchio during cooking. No sooner added, the dried radicchio gives the food a red/purple colour and the typical taste of radicchio without its presence in the form of pieces.

## Claims

1. Method for the production of dried radicchio, comprising the step of bringing a radicchio vegetable material, arranged in the form of at least one thin layer, preferably in the form of a plurality of thin separate layers, into contact with a stream of gas heated to a temperature of between 30°C and 45°C for a time period sufficient to reach a predetermined moisture content in the dried product.

2. Method according to Claim 1, wherein said temperature of the heated gas is between 38°C and 42°C.

3. Method according to Claim 1 or 2, wherein the drying time for the layer or layers of radicchio vegetable material is greater than 24 hours, preferably between 30 and 48 hours.

4. Method according to any one of the preceding claims, wherein said radicchio vegetable material is arranged in the form of adjacent and separate layers on an internal surface of a drying apparatus, said surface being preferably provided with a plurality of holes through which said heated gas is able to pass.

5. Method according to any one of the preceding claims, wherein said gas is air or a mixture comprising air.

6. Method according to any one of the preceding claims, wherein said radicchio vegetable material is in the form of whole leaves and/or separate pieces, preferably cubes, with a size, understood as being the maximum extension, of between 1 mm and 10 mm, preferably between 3 mm and 7 mm, where said separate pieces are obtained by means of cutting of edible parts obtained from the radicchio plant.

7. Method according to any one of the preceding Claims 1 to 6, wherein said radicchio vegetable material is Treviso red radicchio or Verona red radicchio.

8. Method according to any one of the preceding Claims 1 to 7, wherein said dried product is subjected to grinding until a powder is obtained.

9. Dried radicchio obtainable according to the method according to any one of the preceding claims.

10. Dried radicchio according to Claim 9, having a moisture content of between 5% and 15%, preferably 10-12%.

11. Dried radicchio according to Claim 8 or 9, in the form of separate pieces or in powder form.
